(19) Europäisches Patentamt
European Patent Office
Office européen des brevets

(11) **EP 1 198 911 B1**

(12) **EUROPÄISCHE PATENTSCHRIFT**

(45) Veröffentlichungstag und Bekanntmachung des Hinweises auf die Patenterteilung:
**20.04.2005 Patentblatt 2005/16**

(21) Anmeldenummer: **00962196.2**

(22) Anmeldetag: **03.08.2000**

(51) Int Cl.$^7$: **H04J 3/06**, H04B 7/26

(86) Internationale Anmeldenummer:
**PCT/DE2000/002605**

(87) Internationale Veröffentlichungsnummer:
**WO 2001/011811 (15.02.2001 Gazette 2001/07)**

(54) **SYNCHRONISIERUNGSVERFAHREN UND -SYSTEM FÜR TAKTQUELLEN BEI INSBESONDERE PAKETVERMITTELNDEN KOMMUNIKATIONSSYSTEMEN**

SYNCHRONISATION METHOD AND SYSTEM FOR CLOCK SIGNAL SOURCES, IN PARTICULAR IN PACKET TRANSMISSION COMMUNICATION SYSTEMS

PROCEDE ET SYSTEME DE SYNCHRONISATION POUR SOURCES DE SIGNAL D'HORLOGE, EN PARTICULIER DANS DES SYSTEMES DE COMMUNICATION A TRANSMISSION PAR PAQUETS

(84) Benannte Vertragsstaaten:
**DE ES GB**

(30) Priorität: **06.08.1999 DE 19937245**

(43) Veröffentlichungstag der Anmeldung:
**24.04.2002 Patentblatt 2002/17**

(73) Patentinhaber: **SIEMENS AKTIENGESELLSCHAFT**
**80333 München (DE)**

(72) Erfinder: **SPLETT, Armin**
**D-89081 Ulm (DE)**

(56) Entgegenhaltungen:
**EP-A- 0 283 079        EP-A- 0 796 022**
**EP-A- 0 924 878        WO-A-00/42728**
**WO-A-00/48422        WO-A-96/27822**
**WO-A-99/33207        WO-A-99/59052**

**Beschreibung**

Die Erfindung betrifft ein Verfahren zur Synchronisierung von Taktquellen gemäß den oberbegrifflichen Merkmalen des Patentanspruchs 1 und ein Kommunikationssystem, das dieses Verfahren umsetzt.

In Kommunikationssystemen, insbesondere z. B. Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Station (Basisstation bzw. Teilnehmerstatioh) übertragen. Das Abstrahlen der elektromagnetischen Wellen erfolgt.dabei mit Trägerfrequenzen, die in dem für das jeweilige System vorgesehenen Frequenzband liegen. Für zukünftige Mobilfunksysteme mit z.B. CDMA- oder TD/CDMA-Übertragungsverfahren (TD/CDMA: Time/Code Division Multiple Access) über die Funkschnittstelle, beispielsweise das UMTS (Universal Mobile Telecommunication System) oder andere Systeme der 3. Generation sind Frequenzen im Frequenzband von ca. 2000 MHz vorgesehen.

Einzelne Systemeinrichtungen von beispielhaft betrachteten Mobilfunksystemen, wie z.B. Basisstationen, benötigen insbesondere für den Funkbetrieb eine hochgenaue Taktquelle. Als Taktquellen werden dazu derzeit Ofen-stabilisierte Quarzoszillatoren verwendet, die über eine Festnetzleitung mit einer hochgenauen, vorzugsweise atomgenau definierten Referenztaktquelle einer synchronen Vermittlungsanlage, z.B. einer PCM-Vermittlungsanlage (PCM: pulse code modulation) synchronisiert werden. Diese Taktquellen sind aufgrund der aufwendigen Herstellung teuer.

In Zukunft werden Basisstationen jedoch nicht mehr nur an PCM-Netze sondern auch an Paket-vermittlende Netze (IP, ATM/asynchronous transfer mode) angeschlossen. Eine derartige Synchronisation von Taktquellen über die Festnetzleitung ist dann nicht mehr ohne weiteres möglich. Andere Synchronisationsmethoden über Satellitenverbindungen (GPS: global positioning system) oder über ein eingebautes Atomnormal sind möglich, jedoch in der Regel sehr aufwendig und teuer.

Als ein anderes Beispiel seien digitale elektronische Wählsysteme (EWSD) aufgeführt, bei deren einzelnen Stationen und Einrichtungen ebenfalls eine komplette Synchronisierung erforderlich ist. Jedoch besteht auch dort das Problem, daß die Zuführung eines Basistaktes zur Abstimmung aus vorstehend aufgeführten Gründen aufwendig und teuer ist.

Aus der WO 99 33207 ist ein zellulares Telekommunikationsnetzwerk bekannt, welches eine übergeordnete Zeiteinheit in einem Kontrollknoten eines Netzwerks und eine untergeordnete Zeiteinheit in einem Kontrollknoten oder einem kontrollierten Knoten umfasst, wobei die die Synchronisation initiierende Zeiteinheit die Antwort der Synchronisationsanalyse verwendet, um die Synchronisationsanpassung der untergeordneten Zeiteinheit zu bestimmen.

EP-A-0 283 079 beschreibt ein asynchrones Zeitbereichssystem, das mindestens einen Knoten mit einer Schalteinheit enthält, an die eine Vielzahl von Nutzerstationen über Transmissionsverbindungen angeschlossen sind und die dazu geeignet ist, die Nutzerstationen untereinander zu verbinden, wobei mindestens eine der Nutzerstationen eine Zeitstation ist, deren Zeitinformation nach Verbindungsaufbau den anderen Nutzerstationen zur Verfügung gestellt wird.

Der Erfindung liegt die Aufgabe zugrunde, ein einfacheres Synchronisierungsverfahren und -system für Taktquellen in Kommunikationssystemen bereitzustellen.

Diese Aufgabe wird durch das Verfahren mit den Merkmalen des Anspruchs 1, das Kommunikationssystem mit den Merkmalen des Anspruchs 11 bzw. die Kommunikationseinrichtung mit den Merkmalen des Anspruchs 12 gelöst.

Vorteilhafte Weiterbildungen sind Gegenstand von Unteransprüchen.

Durch die Bereitstellung von Einrichtungen mit derart synchronisierbaren Taktquellen und dem Verfahren zu deren Synchronisierung können auch Einrichtungen mit alternden Taktquellen noch zuverlässig betrieben werden, ohne kontinuierlich mit einer hochgenauen Referenztaktquelle verbunden zu sein. Zudem muß insbesondere nicht jede Einrichtung eine eigene präzise Taktquelle mit hoher Ganggenauigkeit aufweisen.

Die Signalisierung jeweils auf eine Anfrage hin durchzuführen ermöglicht die Bestimmung einer Antwortzeit, die dann entsprechend weiter verarbeitet werden kann, um eine mittlere Laufzeit zu erlangen, die dann einen Abgleich bzw. eine Nachregelung der synchronisierbaren Taktquelle ermöglicht. Die Verwendung einer Vielzahl von vorzugsweise mehr als 90.000 nacheinander bestimmten Laufzeiten bietet dabei eine ausreichende Frequenzstabilität.

Besonders vorteilhaft ist die Kombination der Übertragung einer Zeitinformation, wie ein fortlaufender Index als Nutzinhalt, und der Laufzeitmessung bzw. Antwortzeit.

Bei der Verwendung von Einrichtungen, die zwar eigenständige Taktquellen aber keine entsprechend geeignete Synchronisierungs-Steuereinrichtung aufweisen, ermöglicht die Übertragung von Synchronisierungsinformationen durch diese hindurch eine Synchronisierung von anderen beidseitig dazu liegenden Einrichtungen mit Synchronisierungsfähigkeiten.

In kleinen Netzwerken reicht eine einzige genaue.Referenztaktquelle zur Synchronisierung anderer Taktquellen aus. In räumlich größeren Netzwerken sind mehrere, aber dabei in der Regel trotzdem nur relativ wenige Taktquellen sinnvoll, die dann mit entsprechend hohem Aufwand synchronisiert werden, wie dies für sich genommen bekannt ist (PCM, GPS, Atomnormal). Die Kosten der Bereitstellung von synchronisierbaren Einrichtungen wie z.B. Mobilstationen, Basisstationen und anderen Einheiten insbesondere im Basisstationssubsystem können jedoch durch die Verwendung weniger präziser Taktquellen reduziert werden, die abgeglichen oder nachgeregelt werden können.

Besonders vorteilhaft ist auch die Möglichkeit, eine einfache Synchronisierung in Internetprotokoll-(IP)- oder ATM-Leitungen ohne den Einsatz höchstgenauer Taktquellen in allen Einrichtungen des Kommunikationsnetzes zu ermöglichen.

Nachfolgend wird ein Ausführungsbeispiel anhand der Zeichnung näher erläutert. Es zeigt:

Fig. 1 ein Blockschaltbild eines Mobilfunksystems mit Zeitsynchronisierung und

Fig. 2 ein Zeitdiagramm zur räumlichen Veranschaulichung der Zeitpunkte.

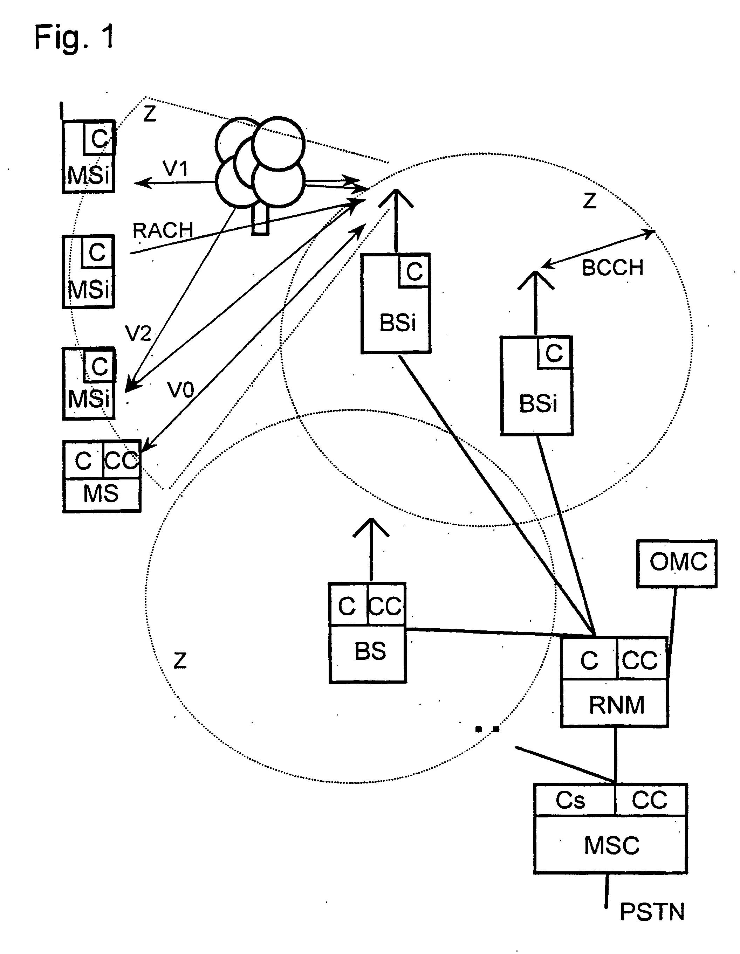

Das in Fig. 1 dargestellte Mobilfunksystem als Beispiel eines bekannten Funk-Kommunikationssystem besteht aus einer Vielzahl von Basisstations-Steuereinrichtungen bzw. Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS, BSi. Eine solche Basisstation BS kann über eine Funkschnittstelle eine Verbindung zu Teilnehmerstationen, z.B. Mobilstationen MS, MSi oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt.

In Fig. 1 sind beispielhaft bestehende Verbindungen V0, V1, V2 zur Übertragung von Nutzinformationen und Signalisierungsinformationen zwischen Mobilstationen MSi bzw. MS und einer Basisstation BS dargestellt. Außerdem ist eine Anforderung zur Ressourcenzuteilung oder eine kurze Bestätigungsmeldung in einem Zugriffskanal RACH durch eine weitere Mobilstation MSi dargestellt. Weiterhin ist ein Organisationskanal (BCCH: Broadcast Control CHannel) dargestellt, der zur Übertragung von Nutz- und Signalisierungsinformationen mit einer definierten Sendeleistung von jeder der Basisstationen BSi für alle Mobilstationen MS, MSi bereitgestellt wird.

Ein Operations- und Wartungszentrum OMC realisiert Kontrollund Wartungsfunktionen für das Mobilfunksystem bzw. für Teile davon. Die Funktionalität dieser Struktur ist auf andere Funk-Kommunikationssysteme übertragbar, insbesondere für Teilnehmerzugangsnetze mit drahtlosem Teilnehmeranschluß.

Gemäß dem vorliegenden Ausführungsbeispiel werden zwischen den verschiedenen Einrichtungen des Kommunikationssystems Zeitinformationen ausgetauscht, die im Netz zentral bereitgestellt werden.

Irgendwo im Netz sind dazu einer oder mehrere zentrale synchronisierte "Taktserver" bzw. Referenztaktquellen Cs vorhanden, hier z.B. in der Mobilvermittlungsstelle MSC. Diese Referenztaktquellen Cs senden dabei unter Steuerung durch eine Synchronisierungsbzw. Taktsteuereinrichtung CC ihre "Uhrzeit" z.B. in einem speziellen "Zeit"-Paket zu einer zu synchronisierenden Einrichtung MS, BS. Das Senden von Zeit-Paketen erfolgt dabei vorzugsweise nach einer entsprechenden Anfrage BQ von einer zu synchronisierenden Einrichtung BS, MS, kann aber auch von der Einrichtung MSC mit der Referenztaktquelle Cs oder einer anderen Einrichtung eingeleitet werden.

Als beispielhafte Einrichtungen, die zu synchronisieren sind, sind hier eine Basisstation BS, eine Mobilstation MS und die Einrichtung RNM zum Zuteilen von funktechnischen Ressourcen dargestellt. Diese haben jeweils eine einstellbare und/oder synchronisierbare Taktquelle C und ebenfalls jeweils eine Synchronisierungs-Steuereinrichtung CC.

Die Zeit-Pakete können je nach Ausgestaltung des Systems z.B. lediglich aus speziellen Signalisierungsbit in einem ansonsten bekannten Übertragungsrahmen bestehen. Aber auch aus einem komplexen, eigenständigen Informationsrahmen bestehende Zeit-Pakete sind möglich, die nicht nur ein Startsignal zur Synchronisierung sondern zudem auch die Uhrzeit und das Datum übermitteln.

Bei einer bevorzugten Ausführung wird die Alterung oder eine sonstige Gangungenauigkeit in einer zu synchronisierenden oder abstimmbaren Taktquelle C bestimmt. Dazu vergleicht eine beispielhaft betrachtete Basisstation BS die empfangene Zeit mit ihrer eigenen momentanen Zeit, die auf ihrer internen Taktquelle C basiert. Nach geeigneter Verarbeitung der Zeit-Differenzen wird die Alterung der Taktquelle C in der Basisstation BS, insbesondere eines Quarzoszillators darin, ermittelt und kann daraufhin entsprechend elektronisch kompensiert werden, indem die Taktquelle C bzw. der Quarzoszillator nachgeregelt wird.

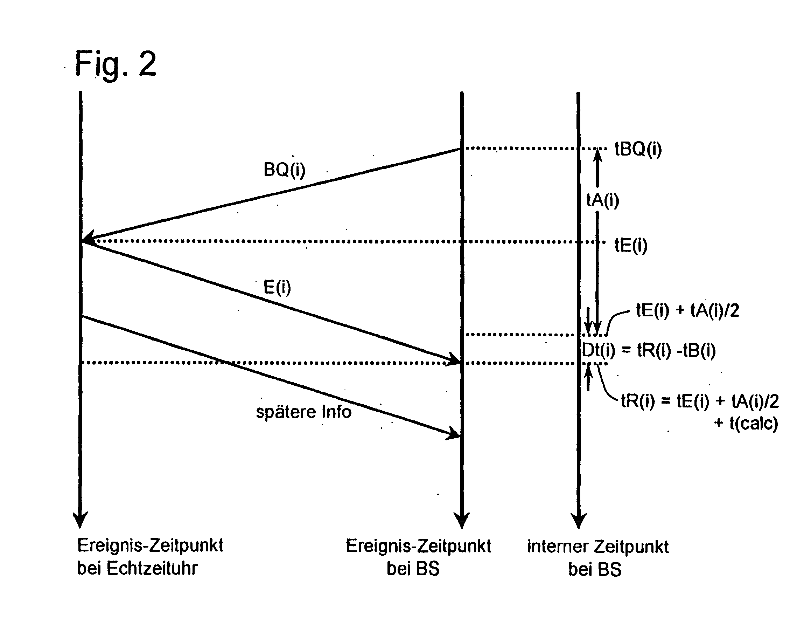

Fig. 2 zeigt den Ablauf des nachfolgenden Verfahrens mit einem ersten Zeitstrahl für eine Referenztaktquelle Cs mit echter, exakter Zeit in der Mobilvermittlungsstelle MSC, einem zweiten Zeitstrahl, der den Zeitwert an einer Basisstation BS eintreffender Signale zeigt, und einem dritten Zeitstrahl, der den Zeitablauf der inneren Uhr C der Basisstation BS im Vergleich dazu darstellt.

Indem die Zeit bzw. ein Synchronisierungssignal jeweils auf eine vorhergehende Anfrage BQ(i) der Basisstation BS gesendet wird, kann die Basisstation BS die bei ihr zur Antwortzeit bzw. -dauer tA(i) eintreffende Antwort mit einer Zeit oder einem Zeitwert E(i) messen. Im einfachsten Fall entspricht die empfangene Zeit E(i) der Uhrzeit beim Absenden der Antwort aus der Referenztaktquelle Cs.

Die einfache Laufzeit des Zeit-Pakets von der Taktquelle zur Basisstation BS wird dann mit der halben Antwortzeit tA(i)/2 abgeschätzt. Die über die Schätzung ermittelten Differenzzeiten bzw. deren Zuverlässigkeit werden z.B. mit einem Wichtungsfaktor g(i) umgekehrt proportional zur Antwortzeit A(i) gewichtet.

Die Basisstation BS sendet z.B. alle 10 Sekunden eine mit i+n (n als fortlaufende natürliche Zahl) numerierte Zeit-Anfrage BQ(i) zur synchronisierten bzw. synchronen Taktquelle Cs. Die Basisstation BS erhält bei derzeit konventionellem Systemaufbau im Mittel nach 2 Sekunden Antwortzeit tA(i) einen Zeitwert tE(i) als Antwort. Die halbe Antwortzeit tA(i)/2 (im Mittel 1 Sekunde) wird zur empfangenen Zeit tE(i) addiert und ergibt eine Referenz-Zeit tR(i):

$$tR(i) = tE(i) + tA(i)/2.$$

Die Differenz zur inneren Zeit tB(i) der Basisstation BS zum Empfangszeitpunkt von tE(i) wird mit

$$Dt(i) = tR(i) - tB(i)$$

bezeichnet. Diese Differenz Dt(i) gibt den Fehlgang der inneren Taktquelle C der Basisstation BS an. Jedoch ist die Differenz Dt(i) kein verläßlicher Wert, da die Laufzeiten von der Basisstation BS zur Referenztaktquelle Cs hin und zurück und die Bearbeitungszeiten bei der Referenztaktquelle Cs variieren können. Die bestimmten Werte tA(i) und Dt(i) entstammen somit Schätzungen.

Vorteilhafterweise wird ein Wichtungsfaktor g(i) für diese Differenzzeiten Dt(i) eingeführt, beispielsweise die umgekehrt proportionale Antwortzeit, also

$$g(i) = 1/tA(i).$$

Ein mittlerer relativer Frequenzfehler Df der Taktquelle C der Basisstation BS kann mit der folgenden Gleichung (lineare Regression mit Summen über i von 1 bis n) aus i Differenzzeiten ermittelt werden:

$$Df/f0 = \{n\Sigma[g(i)^2\, Dt(i)\, tB(i)]$$
$$- \Sigma[g(i)\, Dt(i)]\, \Sigma[g(i)\, tB(i)]\}$$
$$/ \{n\Sigma[g(i)^2\, tB(i)^2] - (\Sigma[g(i)\, tB(i)])^2\}.$$

Je nach Ausführung des z.B. Quarzoszillators in der Taktquelle C in der Basisstation BS kann in deren Schaltung mit dem ermittelten relativen Frequenzfehler Df/f0 mit f0 als einer Nominalfrequenz der Taktquelle bzw. des Quarzoszillators zum Beispiel mittels eines Proportional-Integral-Reglers die Frequenz des Quarzoszillators nachgeregelt und damit synchronisiert werden.

Die erzielbare Genauigkeit ist bei diesem Beispiel berechenbar, wie folgt. Die Standardabweichung des Fehlers Df/f0 in der Laufzeitschätzung und damit die Differenzgenauigkeit sDt von der Differenz Dt wird bei statistischer Unabhängigkeit zwischen den einzelnen Antworten mit sDt = 0,1 Sekunden angenommen. Die Mittelungszeit kann mit T = 1 Millionen Sekunden (12 Tage) angenommen bzw. angesetzt werden, da Quarzoszillatoren mit sehr geringer Alterung, die nur im Bereich von wenigen Tagen nachzuregeln sind, bereits kostengünstig verfügbar sind.

Basierend auf n = 100.000 Antworten in 12 Tagen kann die Standardabweichung sDf/f0 des geschätzten relativen Frequenzfehlers dann aufgrund von Schwankungen im Paket-vermittelnden Netz mit

$$SDf/f0 = sDt / (T\sqrt{n}) \approx 0,3 \text{ ppb}$$

abgeschätzt werden, was bei einer geforderten Frequenzstabilität von 10 ppb ausreichende Reserven für die vorstehend gemachten Annahmen einräumt.

Bei einer besonders bevorzugten Ausführungsform wird als Antwort E(i) ein Zeitwert übertragen, bei dem die Rechen-, Bearbeitungs- und/oder Wartezeit berücksichtigt wird. So können Wartezeiten bis zum Beginn der Verarbeitung der Anfrage BQ(i) berücksichtigt werden. Vorzugsweise werden solche Anfragen jedoch mit Priorität abgearbeitet, um möglichst wenig Zeitvarianzen zu erzeugen.

Als Zeitwert in der Antwort E(i) kann z.B. eine laufende Zahl oder ein Text übertragen werden. Als laufende Zahl kann z.B. auch eine Framenummer der durchnumerierten Datenübertragungsblöcke bei einem Mobilfunk- oder einem IP-Netz verwendet werden.

Alternativ können zur Ermöglichung möglichst exakter Laufzeitbestimmungen auf eine Anfrage BQ(i) hin auch getrennte Antwortsignale gesendet werden. So könnte ein erstes Antwortsignal lediglich eine unspezifizierte Antwort ausbilden, während eigentliche Zeitinformationen in einer zweiten Antwort übermittelt werden.

Insbesondere bei Netzen mit verschiedenen Laufwegen und/oder Laufzeiten für die Übermittlung der Anfrage BQ(i) zur Referenztaktquelle Cs hin und von dort zur anfragenden Station BS zurück ist die Abschätzung mit der Hälfte der Laufzeit 1/2 tA(i) nicht korrekt. Für den Fall einer konstanten Asymmetrie der Laufwege über eine längere Zeit entsteht ein systematischer Fehler, der zwar eine exakte Ermittlung der Frequenz ermöglicht, nicht oder nur bedingt aber die exakte Uhrzeit beziehungsweise Phasenlage.

Möglich ist bei einer alternativen Ausführungsform auch "Antworten" bzw. Zeiten ohne eine Anfrage BQ(i) von der zu synchronisierenden Einrichtung BS auszusenden. Beispielsweise können Zeiten zusammen mit Anfragen gesendet werden, mit denen bei paketvermittelnden Netzen, wie dem Internet oder einem Intranet, überprüft wird, ob eine angeschlossene Station, die lange keine Anfragen mehr gesendet hat, noch aktiv ist.

Natürlich sind in dem Kommunikationssystem auch weiterhin herkömmliche Einrichtungen mit eigenständigen Taktquellen einsetzbar, die so genau sind, daß eine ständige Synchronisierung nicht zu erfolgen braucht und eine Synchronisierungseinrichtung CC fehlt. Im Fall solcher Einrichtungen, wie den Basisstationen BSi in Fig. 1, übermitteln diese dann Anfragen BQ(i) und Antwortsignale E(i) zwischen z.B. einer Mobilstätion MS und der Mobilvermittlungsstelle RNM.

Auch sind Anwendungen zwischen dem CORE innerhalb der Basisstation, in dem die Synchronisierung mit den externen Stationen erfolgt, und abgesetzten Einheiten in einer Basisstation, z.B. Carrier Units, die eine oder mehrere Träger und/oder Trägerfrequenz bearbeiten, möglich, wenn das Kommunikationssystem z.B. Basisstationen (distributed base stations) mit abgesetzten Einheiten aufweist, oder zwischen Basisstation und Basis- und Mobilvermittlungsstellen möglich.

Beim erfindungsgemäßen Verfahren kann beim Wechsel einer mobilen Einrichtung mit synchronisierbarer Taktquelle von dem Bereich einer Einrichtung mit Referenztaktquelle in den Bereich einer anderen Einrichtung mit Referenztaktquelle die Synchronisierung mittels der anderen Einrichtung mit Referenztaktquelle durchgeführt, insbesondere weitergeführt werden.

**Patentansprüche**

1. Verfahren zur Synchronisierung von Taktquellen in einem Kommunikationssystem, insbesondere Funk-Kommunikationssystem, mit einer Vielzahl von direkt oder indirekt miteinander kommunizierenden Einrichtungen (PSTN, MSC, RNM, BSi, MSi, OMC), die für deren Betrieb Referenztaktquellen (Cs) aufweisen, wobei Taktquellen (C) von einer oder mehreren kommunizierenden Einrichtungen (MS, BS, RNM) mittels asynchroner Signalisierung von zumindest einer Referenztaktquelle (Cs) aus synchronisiert werden und

   wobei eine Einrichtung (BS) mit synchronisierbarer Taktquelle (C) die empfangene Zeit (E(i)) und/oder eine daraus bestimmte oder abgeschätzte Referenz-Zeit (tR(i)) mit ihrer eigenen momentanen Zeit (tB(i)), die auf deren eigener synchronisierbarer Taktquelle (C) basiert, vergleicht und eine Zeit-Differenz (Dt(i)) bildet,

   **dadurch gekennzeichnet,**

   **daß** mehrere Zeit-Differenzen (Dt(i), Dt(i+1),...) aufeinanderfolgend bestimmt und gemittelt werden, wobei bei der Mittelung eine lineare Regression und/oder ein Wichtungsfaktor (g(i)) verwendet werden.

2. Verfahren nach Anspruch 1, bei dem die Signalisierung jeweils auf eine Anfrage (BQ(i)) erfolgt, die von einer kommunizierenden Einrichtung (MS, BS, RNM) mit synchronisierbarer Taktquelle (C) zu einer Einrichtung (MSC) mit einer Referenztaktquelle (Cs) gesendet wird, und/oder eine Laufzeit (tA(i)) ermitteln läßt.

3. Verfahren nach Anspruch 1 oder 2, bei dem zwischen den verschiedenen Einrichtungen des Kommunikationssystems Zeitinformationen (E(i)) ausgetauscht werden, die im Netz zentral bereitgestellt und insbesondere innerhalb eines allgemein verwendeten Übertragungsrahmens übertragen werden.

4. Verfahren nach Anspruch 3, bei dem als Zeitinformationen spezielle Signalisierungsbit oder ein komplexes Zeit-Paket mit insbesondere der genauen Uhrzeit und dem Datum übermittelt werden.

5. Verfahren nach einem der vorhergehenden Ansprüche, bei dem eine Alterung und/oder eine sonstige Gangungenauigkeit in einer synchronisierbaren und/oder abstimmbaren Taktquelle (C), insbesondere einem Quarzoszillator, kompensiert und/oder nachgeregelt sowie vorzugsweise zuvor bestimmt wird.

6. Verfahren nach einem der vorhergehenden Ansprüche, bei dem mehr als 90.000 Zeit-Differenzen (Dt(i), Dt(i+1),...) aufeinanderfolgend bestimmt und gemittelt werden.

7. Verfahren nach Anspruch 6, bei dem der Wichtungsfaktor (g(i)) umgekehrt proportional der Antwortzeit (tA(i)) ist.

8. Verfahren nach einem der vorhergehenden Ansprüche, bei dem Einrichtungen (BSi) mit eigenständigen stabilen Taktquellen (C) aber ohne eine entsprechend geeignete Synchronisierungs-Steuereinrichtung (CC) Synchronisierungsinformationen zwischen Einrichtungen (MSC) mit einer Referenztaktquelle (CS) und einer Synchronisierungs-Steuereinrichtung (CC) und Einrichtungen (MS) mit synchronisierbarer Taktquelle (C) übermitteln.

9. Verfahren nach einem der vorhergehenden Ansprüche, bei dem beim Wechsel einer mobilen Einrichtung (MS) mit synchronisierbarer Taktquelle (C) von dem Bereich einer Einrichtung (MSC) mit Referenztaktquelle (CS) in den Bereich einer anderen Einrichtung (MSC) mit Referenztaktquelle (CS) die Synchronisierung mittels der anderen Einrichtung (MSC) mit Referenztaktquelle (CS) durchgeführt, insbesondere weitergeführt wird.

**10.** Verfahren nach einem der vorhergehenden Ansprüche, bei dem das Kommunikationssystem ein paketvermittelndes System ist, insbesondere ein Intranet oder das Internet.

**11.** Kommunikationssystem, insbesondere Funk-Kommunikationssystem,
mit einer Vielzahl von direkt oder indirekt miteinander kommunizierenden Einrichtungen (PSTN, MSC, RNM, BSi, MSi, OMC), die für deren Betrieb Referenztaktquellen (Cs) aufweisen, wobei die Taktquellen (C) von einer oder mehreren kommunizierenden Einrichtungen (MS, BS, RNM) mittels asynchroner Signalisierung von zumindest einer Referenztaktquelle (Cs) aus synchronisierbar sind und
wobei eine Einrichtung (BS) mit synchronisierbarer Taktquelle (C) vorgesehen ist, welche die empfangene Zeit (E(i))
und/oder eine daraus bestimmte oder abgeschätzte Referenz-Zeit (tR(i)) mit ihrer eigenen momentanen Zeit (tB(i)), die auf deren eigener synchronisierbarer Taktquelle (C) basiert, vergleicht und eine Zeit-Differenz (Dt(i)) bildet,
**dadurch gekennzeichnet,**
**daß** das Kommunikationssystem so ausgebildet ist, daß mehrere Zeit-Differenzen (Dt(i), Dt(i+1),...) aufeinanderfolgend bestimmt und gemittelt werden, wobei bei der Mittelung eine lineare Regression und/oder ein Wichtungsfaktor (g(i)) verwendet werden.

**12.** Kommunikationseinrichtung für ein Kommunikationssystem, mit einer synchronisierbaren Taktquelle (C), die mittels asynchroner Signalisierung von zumindest einer Referenztaktquelle (Cs) einer oder mehrerer kommunizierender Einrichtungen synchronisierbar ist,
und mit einer Synchronisierungs-Steuereinrichtung (CC), welche die empfangene Zeit (E(i)) und/oder eine daraus bestimmte oder abgeschätzte Referenz-Zeit (tR(i)) mit ihrer eigenen momentanen Zeit (tB(i)), die auf der eigenen synchronisierbaren Taktquelle (C) basiert, vergleicht und eine Zeit-Differenz (Dt(i)) bildet,
**dadurch gekennzeichnet, daß**
die Synchronisierungs-Steuereinrichtung (CC) so ausgebildet ist, daß mehrere Zeit-Differenzen (Dt(i), Dt(i+1),...) aufeinanderfolgend bestimmt und gemittelt werden, wobei bei der Mittelung eine lineare Regression und/oder ein Wichtungsfaktor (g(i)) verwendet werden.

**13.** Kommunikationseinrichtung nach Anspruch 12, die als eine Basisstation (BS) für das Kommunikationssystem ausgebildet ist.

**14.** Kommunikationseinrichtung nach Anspruch 12, die

als eine Mobilstation (MS) für das Kommunikationssystem ausgebildet ist.

**Claims**

**1.** Method for synchronization of clock sources in a communications system, in particular a radio communications system, having a large number of devices (PSTN, MSC, RNM, BSi, MSi, OMC) which communicate directly or indirectly with one another and have reference clock sources (Cs) for their operation, in which clock sources (C) of one or more communicating devices (MS, BS, RNM) are synchronized by means of asynchronous signalling from at least one reference clock source (Cs) and a device (BS) having a clock source (C) which can be synchronized compares the received time (E(i)) and/or a reference time (tR(i)), which is determined or estimated from it, with its own instantaneous time (tB(i)), which is based on its own clock source (C) which can be synchronized, and forms a time difference (Dt(i)),
**characterized**
**in that** a number of time differences (Dt(i), Dt(i+1),...) are determined successively and are averaged, with a linear regression and/or a weighting factor (g(i)) being used in the averageing process.

**2.** Method according to Claim 1, in which
the signalling in each case takes place in response to a request (BQ(i)), which is sent by a communicating device (MS, BS, RNM) with a clock source (C), which can be synchronized, to a device (MSC) with a reference clock source (Cs), and/or allows a delay time (tA(i)) to be determined.

**3.** Method according to Claim 1 or 2, in which
time information (E(i)) is interchanged between the various devices in the communications system, which time information (E(i)) is provided centrally in the network and is transmitted, in particular, within a generally used transmission frame.

**4.** Method according to Claim 3, in which
a specific signalling bit or a complex time packet with, in particular, the accurate time and the date, is transmitted as time information.

**5.** Method according to one of the preceding claims, in which an ageing and/or any other timing inaccuracy in a clock source (C) which can be synchronized and/or can be tuned, in particular a crystal oscillator, is compensated for, and/or is readjusted and, preferably, is determined in advance.

**6.** Method according to one of the preceding claims, in which more than 90 000 time differences (Dt(i), Dt(i+1),...) are determined successively and are averaged.

7. Method according to Claim 6, in which the weighting factor (g(i)) is inversely proportional to the response time (tA(i)).

8. Method according to one of the preceding claims, in which devices (BSi) with autonomous stable clock sources (C) but without a correspondingly suitable synchronization control device (CC) transmit synchronization information between devices (MSC) with a reference clock source (CS) and with a synchronization control device (CC), and devices (MS) with a clock source (C) which can be synchronized.

9. Method according to one of the preceding claims, in which, when a mobile device (MS) with a clock source (C) which can be synchronized moves from the area of one device (MSC) with a reference clock source (CS) into the area of another device (MSC) with a reference clock source (CS), the synchronization is carried out, in particular is continued, by means of the other device (MSC) with a reference clock source (CS).

10. Method according to one of the preceding claims, in which the communications system is a packet-switching system, in particular an Intranet or the Internet.

11. Communications system, in particular a radio communications system, having a large number of devices (PSTN, MSC, RNM, BSi, MSi, OMC) which communicate directly or indirectly with one another and have reference clock sources (Cs) for their operation,
in which the clock sources (C) of one or more communicating devices (MS, BS, RNM) can be synchronized by means of asynchronous signalling from at least one reference clock source (Cs), and
in which a device (BS) with a clock source (C) is provided, which can be synchronized and compares the received time (E(i)) and/or a reference time (tR(i)) which is estimated or determined from it with its own instantaneous time (tB(i)), which is based on its own clock source (C) which can be synchronized, and forms a time difference (Dt(i)),
**characterized**
**in that** the communications system is designed such that a number of time differences (Dt(i), Dt(i+1),...) are determined successively and are averaged, with a linear regression and/or a weighting factor (g(i)) being used in the averageing process.

12. Communications device for a communications system, having a clock source (C) which can be synchronized by means of asynchronous signalling from at least one reference clock source (Cs) of one or more communicating devices, and having a synchronization control device (CC) which compares the received time (E(i)) and/or a reference time (tR(i)), which is determined or estimated from it, with its own instantaneous time (tB(i)), which is based on its own clock source (C) which can be synchronized, and forms a time difference (Dt(i)),
**characterized in that**
the synchronization control device (CC) is designed such that a number of time differences (Dt(i), Dt(i+1),...) are determined successively and are averaged, with linear regression and/or a weighting factor (g(i)) being used in the averaging process.

13. Communications device according to Claim 12, which is in the form of a base station (BS) for the communications system.

14. Communications device according to Claim 12, which is in the form of a mobile station (MS) for the communications system.

**Revendications**

1. Procédé pour la synchronisation de sources de signal d'horloge dans un système de communication, notamment un système de radiocommunication, comprenant une pluralité de dispositifs communiquant entre eux directement ou indirectement (PSTN, MSC, RNM, BSi, MSi, OMC), qui présentent des sources de signal d'horloge de référence (Cs) pour leur fonctionnement,
des sources de signal d'horloge (C) d'un ou de plusieurs dispositifs communiquant (MS, BS, RNM) étant synchronisées au moyen de signalisation asynchrone depuis au moins une source de signal d'horloge de référence (Cs) et
un dispositif (BS) à source de signal d'horloge pouvant être synchronisée (C) comparant le temps reçu (E (i)) et/ou un temps de référence (tR (i)) qui en est déterminé ou évalué, avec son propre temps momentané (tB (i)) qui est basé sur sa propre source de signal d'horloge (C) pouvant être synchronisée, et formant une différence de temps (Dt (i)),
**caractérisé en ce que**
plusieurs différences de temps (Dt (i), Dt (i+1), ...) sont déterminées les unes après les autres et qu'une moyenne en est faite, une régression linéaire et/ou un facteur de pondération (g (i)) étant utilisé pour la moyenne.

2. Procédé selon la revendication 1, dans lequel la signalisation est respectivement réalisée sur une demande (BQ (i)) qui est émise par un dispositif communiquant (MS, BS, RNM) à source de signal d'horloge (C) pouvant être synchronisée, vers un dispositif (MSC) ayant une source de signal d'horloge de référence (Cs), et/ou qui permet de déterminer un temps de propagation (tA (i)).

3. Procédé selon la revendication 1 ou 2, dans lequel des informations de temps (E (i)) sont échangées entre les différents dispositifs du système de communication, ces informations de temps étant fournies de manière centrale dans le réseau et étant transmises notamment dans une trame de transmission généralement utilisée.

4. Procédé selon la revendication 3, dans lequel des bits de signalisation spéciaux ou un paquet de temps complexe, avec notamment l'heure exacte et la date, sont transmis comme informations de temps.

5. Procédé selon l'une quelconque des revendications précédentes, dans lequel un vieillissement et/ou une autre inexactitude de marche dans une source de signal d'horloge (C) pouvant être synchronisée et/ou être accordée, notamment dans un oscillateur à quartz, est compensé et/ou est réglé ainsi que de préférence déterminé auparavant.

6. Procédé selon l'une quelconque des revendications précédentes, dans lequel plus de 90 000 différences de temps (Dt (i), Dt (i+1), ...) sont déterminées les unes après les autres et pour lesquelles une moyenne est faite.

7. Procédé selon la revendication 6, dans lequel le facteur de pondération (g (i)) est inversement proportionnel au temps de réponse (tA (i)).

8. Procédé selon l'une quelconque des revendications précédentes, dans lequel des dispositifs (Bsi) ayant des sources de signal d'horloge stables autonomes (C) mais pas de dispositif de commande de synchronisation adéquat (CC) transmettent des informations de synchronisation entre des dispositifs (MSC) ayant une source de signal d'horloge de référence (CS) et un dispositif de commande de synchronisation (CC) et des dispositifs (MS) ayant une source de signal d'horloge (C) pouvant être synchronisée.

9. Procédé selon l'une quelconque des revendications précédentes, dans lequel, lors du changement d'un dispositif mobile (MS) à source de signal d'horloge (C) pouvant être synchronisée de la zone d'un dispositif (MSC) à source de signal d'horloge de référence (CS) à la zone d'un autre dispositif (MSC) à source de signal d'horloge de référence (CS), la synchronisation est réalisée au moyen de l'autre dispositif (MSC) à source de signal d'horloge de référence (CS), notamment poursuivie.

10. Procédé selon l'une quelconque des revendications précédentes, dans lequel le système de communication est un système de commutation par paquets, notamment un Intranet ou l'Internet.

11. Système de communication, notamment système de radiocommunication,
comprenant une pluralité de dispositifs communiquant entre eux directement ou indirectement (PSTN, MSC, RNM, BSi, MSi, OMC), qui présentent des sources de signal d'horloge de référence (Cs) pour leur fonctionnement, les sources de signal d'horloge (C) d'un ou de plusieurs dispositifs communiquant (MS, BS, RNM) pouvant être synchronisées au moyen de signalisation asynchrone depuis au moins une source de signal d'horloge de référence (Cs) et
un dispositif (BS) à source de signal d'horloge pouvant être synchronisée (C) étant prévu, comparant le temps reçu (E (i) ) et/ou un temps de référence (tR (i)) qui en est déterminé ou évalué avec son propre temps momentané (tB (i)) qui est basé sur sa propre source de signal d'horloge (C) pouvant être synchronisée, et formant une différence de temps (Dt (i)),
**caractérisé en ce que**
le système de communication est conçu de telle manière que plusieurs différences de temps (Dt (i), Dt (i+1), ...) sont déterminées les unes après les autres et qu'une moyenne en est faite, une régression linéaire et/ou un facteur de pondération (g (i)) étant utilisé pour la moyenne.

12. Dispositif de communication pour un système de communication, comprenant une source de signal d'horloge (C) pouvant être synchronisée, qui peut être synchronisée au moyen de signalisation asynchrone à partir d'au moins une source de signal d'horloge de référence (Cs) d'un ou de plusieurs dispositifs communiquant,
et comprenant un dispositif de commande de synchronisation (CC), lequel compare le temps reçu (E (i)) et/ou un temps de référence (tR (i)) qui en est déterminé ou évalué avec son propre temps momentané (tB (i)) qui est basé sur sa propre source de signal d'horloge (C) pouvant être synchronisée, et forme une différence de temps (Dt (i)),
**caractérisé en ce que**
le dispositif de commande de synchronisation (CC) est conçu de telle manière que plusieurs différences de temps (Dt (i), Dt (i+1), ...) sont déterminées les unes après les autres et qu'une moyenne en est faite, une régression linéaire et/ou un facteur de pondération (g (i)) étant utilisé pour la moyenne.

13. Dispositif de communication selon la revendication 12, qui est conçu comme une station de base (BS) pour le système de communication.

14. Dispositif de communication selon la revendication 12, qui est conçu comme une station mobile (MS) pour le système de communication.

## Fig. 1

# Fig. 2

BQ(i)

tBQ(i)

tA(i)

tE(i)

E(i)

tE(i) + tA(i)/2

Dt(i) = tR(i) -tB(i)

spätere Info

tR(i) = tE(i) + tA(i)/2
                  + t(calc)

Ereignis-Zeitpunkt
bei Echtzeituhr

Ereignis-Zeitpunkt
bei BS

interner Zeitpunkt
bei BS